(19) Europäisches Patentamt
European Patent Office
Office européen des brevets

(11) **EP 4 206 994 A1**

(12) **EUROPEAN PATENT APPLICATION**
published in accordance with Art. 153(4) EPC

(43) Date of publication:
**05.07.2023 Bulletin 2023/27**

(21) Application number: **21868599.8**

(22) Date of filing: **14.09.2021**

(51) International Patent Classification (IPC):
**G06N 3/063** $^{(2023.01)}$     **G06K 9/62** $^{(2022.01)}$

(86) International application number:
**PCT/CN2021/118082**

(87) International publication number:
**WO 2022/057776 (24.03.2022 Gazette 2022/12)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **21.09.2020 CN 202010997722**

(71) Applicant: **Huawei Technologies Co., Ltd.
Shenzhen, Guangdong 518129 (CN)**

(72) Inventors:
• **ZHANG, Wei**
**Shenzhen, Guangdong 518129 (CN)**
• **HOU, Lu**
**Shenzhen, Guangdong 518129 (CN)**
• **YIN, Yichun**
**Shenzhen, Guangdong 518129 (CN)**
• **SHANG, Lifeng**
**Shenzhen, Guangdong 518129 (CN)**

(74) Representative: **Gill Jennings & Every LLP
The Broadgate Tower
20 Primrose Street
London EC2A 2ES (GB)**

(54) **MODEL COMPRESSION METHOD AND APPARATUS**

(57)     A model compression method is provided, which can be applied to the field of artificial intelligence. The method includes: obtaining a first neural network model, a second neural network model, and a third neural network model; processing first to-be-processed data by using the first neural network model, to obtain a first output; processing the first to-be-processed data by using the third neural network model, to obtain a second output; determining a first target loss based on the first output and the second output, and updating the second neural network model based on the first target loss, to obtain an updated second neural network model; and compressing the updated second neural network model to obtain a target neural network model. The model generated based on the method has higher processing precision.

```
Obtain a first neural network model, a second neural
network model, a third neural network model, and to-
be-processed data, where the first neural network        601
model includes a transformer layer
                     │
                     ▼
Process the to-be-processed data by using the first       602
neural network model, to obtain a first output
                     │
                     ▼
Process the to-be-processed data by using the third       603
neural network model, to obtain a second output
                     │
                     ▼
Obtain a target loss based on the first output and the
second output, and update the second neural network       604
model based on the target loss, to obtain an updated
second neural network model
                     │
                     ▼
Compress the updated second neural network model          605
to obtain a target neural network model
```

FIG. 6

## Description

This application claims priority to Chinese Patent Application No. 202010997722.4, filed with the China National Intellectual Property Administration on September 21, 2020 and entitled "MODEL COMPRESSION METHOD AND APPARATUS", which is incorporated herein by reference in its entirety.

## TECHNICAL FIELD

This application relates to the field of artificial intelligence, and in particular, to a model compression method and apparatus.

## BACKGROUND

Artificial intelligence (artificial intelligence, AI) is a theory, a method, a technology, or an application system that simulates, extends, and expands human intelligence by using a digital computer or a machine controlled by a digital computer, to perceive an environment, obtain knowledge, and achieve an optimal result based on the knowledge. In other words, artificial intelligence is a branch of computer science, and is intended to understand the essence of intelligence and produce a new intelligent machine that can react in a manner similar to human intelligence. Artificial intelligence is to study design principles and implementation methods of various intelligent machines, so that the machines have perception, inference, and decision-making functions.

In the past two years, pre-trained language models represented by BERT (Bidirectional Encoder Representation from Transformers) and based on a transformer structure have become a new paradigm in the field of natural language processing. Compared with an earlier model, the pre-trained language model has a stronger representation learning, autoregression, or autoencoding pre-training approach. This enables the pre-trained language model to capture more context information and learn better representations of words. In addition, the pre-trained language model features good transferability. A "pre-training-fine-tuning" mode can be applied to various NLP tasks and generally achieve current best effect quickly without a large amount of training data. Furthermore, numerous current applications and researches (for example, out-of-domain detection) indicate that the current pre-trained language model generalizes well to a large amount of domain data.

However, it cannot be ignored that the pre-trained language model generally has a massive quantity of parameters. For example, a BERT-base model has approximately 110 million parameters, with a model size of about 420 MB in a 32-bit floating-point representation; and a BERT-large model has 340 million parameters, with a model size of 1.3 GB. Due to such a large quantity of parameters and complex matrix operations in the process of operation, the model usually requires a considerable quantity of computing resources and has high storage overheads and a long latency during inference. These factors seriously hinder application of the model in industry. A common cloud server needs to support in processing a large quantity of concurrent requests, and therefore has high requirements for resource occupation and a latency of a model. In addition, with the development of technologies, performance of terminal-side devices such as mobile phones is increasingly high. It is possible to deploy or even train a deep model on these terminal devices. However, due to their limited resources, the terminal-side devices also place many limitations on a model. Therefore, compressing a large-scale model such as a pre-trained language model while ensuring model processing precision becomes an important problem to be resolved urgently.

## SUMMARY

According to a first aspect, this application provides a model compression method. The method includes: obtaining a first neural network model, a second neural network model, and a third neural network model, where the first neural network model includes a transformer (transformer) layer, the second neural network model includes the first neural network model or a neural network model obtained by performing parameter update on the first neural network model, the third neural network model is obtained by compressing the second neural network model; processing first to-be-processed data by using the first neural network model, to obtain a first output; processing the first to-be-processed data by using the third neural network model, to obtain a second output; determining a first target loss based on the first output and the second output, and updating the second neural network model based on the first target loss, to obtain an updated second neural network model; and compressing the updated second neural network model to obtain a target neural network model.

In each iterative training process, a loss may be constructed based on an output of a compressed model and an output of the first neural network; parameter update is performed, on a model before compression, to obtain an updated model; and the updated model is compressed, to obtain a compressed model. The updated model and the compressed model that are obtained may be used in a next iteration process. In an (i-1)$^{th}$ iterative training process, the second neural network model is an updated model; the third neural network model is a compressed model; and the second neural network model and the third neural network model may be used in a next iteration process (an $i^{th}$ iteration process).

Specifically, in an initial iterative training process, the second neural network model is the same as the first neural network model. In a subsequent iteration process, the second neural network model is a neural network model obtained by performing parameter update on a second neural network model that is obtained in a previous iteration process. An initial source of the second neural network model obtained in the previous iteration process may be the first neural network model. In other words, the second neural network model obtained in the previous iteration process is obtained by performing parameter update on the first neural network model at least once. Therefore, the second neural network model may also be understood as a neural network model obtained by performing parameter update on the first neural network model.

It should be understood that in some implementations, in an initial iterative training process, the second neural network model may alternatively be a neural network model obtained by performing parameter update on the first neural network model. For example, the second neural network model may alternatively be a neural network model obtained by performing parameter fine-tuning on the first neural network model.

Compression may include at least one of model pruning, weight sharing, kernel sparsity (regular), quantization, binarization, low-rank decomposition, and the like.

In this embodiment of this application, although a target loss is obtained based on outputs of the first neural network model and the third neural network model, the target loss is used to update the second neural network model. This is because the third neural network model is a model obtained by quantizing the second neural network model, and a parameter of the third neural network model is expressed by using several fixed parameters. If the third neural network model is updated based on the target loss, the parameter of the third neural network model can be changed only among several fixed parameters, to ensure that a size of the third neural network model does not change or does not change much. Model precision can be better improved only when a parameter of a model is updated at a small granularity (for example, is continuous and non-discrete). For example, if the parameter of the third neural network model is changed only among several fixed parameters (0, -1, 1), the parameter of the third neural network may be changed from 0 to -1 or from 0 to 1 during update of the parameter, to ensure that the size of the third neural network model does not change or does not change much. If the parameter of the third neural network model is changed from -1 to 0 or from -1 to 1, or is changed from 1 to -1 or from 1 to 0, data processing precision of the third neural network model may be greatly reduced.

In this embodiment of this application, the second neural network model is updated based on the first target loss, to obtain the updated second neural network model. The second neural network model is an original model before quantization. Therefore, the second neural network model may be updated by using continuous (non-discrete) values. As a result, model processing precision of a compressed second neural network model (referred to as the target neural network in subsequent embodiments) is close to that of the first neural network model, and the target neural network model has higher model processing precision than the third neural network model.

In a possible implementation, a difference between processing results obtained by processing same data by using the second neural network model and the first neural network model falls within a preset range. The second neural network model is the neural network model obtained by performing parameter update on the first neural network model, and data processing precision of the second neural network model is close to data processing precision of the first neural network model.

In a possible implementation, a difference between processing results obtained by processing same data by using the updated second neural network model and the first neural network model falls within the preset range. Data processing precision of the updated second neural network model is close to the data processing precision of the first neural network model.

In a possible implementation, the third neural network model is obtained by quantizing the second neural network model, and the compressing the updated second neural network model to obtain a target neural network model includes:

quantizing the updated second neural network model to obtain the target neural network model.

In a possible implementation, the second neural network model and the third neural network model each include an embedding layer, a transformer layer, and an output layer; the first output is an output of a target layer in the second neural network model; the second output is an output of a target layer in the third neural network model; and the target layer includes at least one of the embedding layer, the transformer layer, and the output layer.

In a possible implementation, the method further includes:

processing second to-be-processed data by using the first neural network model, to obtain a third output;
processing the second to-be-processed data by using the target neural network model, to obtain a fourth output;
determining a second target loss based on the third output and the fourth output, and updating the updated second neural network model based on the second target loss, to obtain a fourth neural network model; and compressing the fourth neural network model to obtain an updated target neural network model.

In a possible implementation, the first to-be-processed data includes one of audio data, text data, and image data.

In a possible implementation, the obtaining a first neural network model includes:
performing parameter fine-tuning or knowledge distillation on a pre-trained language model, to obtain the first neural network model, where processing precision of the first neural network model during target task processing is higher than a preset value.

The first neural network model may be a model obtained by performing processing such as parameter fine-tuning or knowledge distillation on the pre-trained language model. Compared with an earlier model, the pre-trained language model has a stronger representation learning, autoregression, or autoencoding pre-training approach. This enables the pre-trained language model to capture more context information and learn better representations of words. In addition, the pre-trained language model features good transferability. A "pre-training-fine-tuning" mode can be applied to various NLP tasks and generally achieve a current best effect quickly without a huge amount of training data. Furthermore, numerous current applications and researches (for example, out-of-domain detection) indicate that the current pre-trained language model generalizes well to a large amount of domain data.

According to a second aspect, this application provides a model compression apparatus. The apparatus includes an obtaining module, a data processing module, a model update module, and a model compression module.

The obtaining module is configured to obtain a first neural network model, a second neural network model, and a third neural network model, where the first neural network model includes a transformer (transformer) layer, the second neural network model includes the first neural network model or a neural network model obtained by performing parameter update on the first neural network model, and the third neural network model is obtained by compressing the second neural network model.

The data processing module is configured to: process first to-be-processed data by using the first neural network model, to obtain a first output; and process the first to-be-processed data by using the third neural network model, to obtain a second output.

The model update module is configured to: determine a first target loss based on the first output and the second output, and update the second neural network model based on the first target loss, to obtain an updated second neural network model.

The model compression module is configured to compress the updated second neural network model to obtain a target neural network model.

In a possible implementation, a difference between processing results obtained by processing same data by using the second neural network model and the first neural network model falls within a preset range.

In a possible implementation, a difference between processing results obtained by processing same data by using the updated second neural network model and the first neural network model falls within the preset range.

In a possible implementation, the third neural network model is obtained by quantizing the second neural network model, and the model compression module is configured to quantize the updated second neural network model to obtain the target neural network model.

In a possible implementation, the second neural network model and the third neural network model each include an embedding layer, a transformer layer, and an output layer; the first output is an output of a target layer in the second neural network model; the second output is an output of a target layer in the third neural network model; and the target layer includes at least one of the embedding layer, the transformer layer, and the output layer.

In a possible implementation, the data processing module is configured to: process second to-be-processed data by using the first neural network model, to obtain a third output; and process the second to-be-processed data by using the target neural network model, to obtain a fourth output.

The model update module is configured to: determine a second target loss based on the third output and the fourth output, and update the updated second neural network model based on the second target loss, to obtain a fourth neural network model.

The model compression module is configured to compress the fourth neural network model to obtain an updated target neural network model.

In a possible implementation, the first to-be-processed data includes one of audio data, text data, and image data.

In a possible implementation, the obtaining module is configured to perform parameter fine-tuning or knowledge distillation on a pre-trained language model, to obtain the first neural network model, where processing precision of the first neural network model during target task processing is higher than a preset value.

According to a third aspect, an embodiment of this application provides a model compression apparatus. The model compression apparatus may include a memory, a processor, and a bus system. The memory is configured to store a program, and the processor is configured to execute the program in the memory, to perform the method according to any one of the first aspect and the possible implementations of the first aspect.

According to a fourth aspect, an embodiment of this application provides a computer-readable storage medium. The computer-readable storage medium stores a computer program, and when the computer program is run on a computer, the computer is enabled to perform the method according to any one of the first aspect and the possible implementations of the first aspect.

According to a fifth aspect, an embodiment of this application provides a computer program. When the computer program is run on a computer, the computer is enabled to perform the method according to any one of the first aspect and the possible implementations of the first aspect.

According to a sixth aspect, this application provides a chip system. The chip system includes a processor. The processor is configured to support an execution device or a training device in implementing the functions in the foregoing aspects, for example, sending or processing the data or information in the foregoing method. In a possible design, the chip system further includes a memory. The memory is configured to store program instructions and data that are necessary for the execution device or the training device. The chip system may include a chip, or may include a chip and another discrete device.

An embodiment of this application provides a model compression method. The method includes: obtaining a first neural network model, a second neural network model, and a third neural network model, where the first neural network model includes a transformer (transformer) layer, the second neural network model includes the first neural network model or a neural network model obtained by performing parameter update on the first neural network model, the third neural network model is obtained by compressing the second neural network model; processing first to-be-processed data by using the first neural network model, to obtain a first output; processing the first to-be-processed data by using the third neural network model, to obtain a second output; determining a first target loss based on the first output and the second output, and updating the second neural network model based on the first target loss, to obtain an updated second neural network model; and compressing the updated second neural network model to obtain a target neural network model. This embodiment is different from a conventional model compression manner. In this embodiment, feedforward is performed on a compressed model (the third neural network model), a target error is calculated, and parameter update is performed, based on the target error, on a model (the second neural network model) before compression. As a result, model processing precision of a compressed second neural network model (the target neural network) is close to that of the first neural network model. The target neural network model has higher model processing precision than the third neural network model.

## BRIEF DESCRIPTION OF DRAWINGS

FIG. 1 is a schematic diagram of a structure of an artificial intelligence main framework;
FIG. 2 shows a natural language processing system;
FIG. 3 shows another natural language processing system;
FIG. 4 is a schematic diagram of a device related to natural language processing according to an embodiment of this application;
FIG. 5 is a schematic diagram of an architecture of a transformer layer;
FIG. 6 is a schematic diagram of an embodiment of a model compression method according to an embodiment of this application;
FIG. 7 is a schematic diagram of a structure of a neural network model according to an embodiment of this application;
FIG. 8 is a schematic diagram of a structure of a transformer layer;
FIG. 9 is a schematic diagram of an operation of an attention head;
FIG. 10 is a schematic diagram of an embodiment of a model compression method according to an embodiment of this application;
FIG. 11 is a schematic diagram of a model compression apparatus according to an embodiment of this application;
FIG. 12 is a schematic diagram of a structure of an execution device according to an embodiment of this application;
FIG. 13 is a schematic diagram of a structure of a training device according to an embodiment of this application; and
FIG. 14 is a schematic diagram of a structure of a chip according to an embodiment of this application.

## DESCRIPTION OF EMBODIMENTS

The following describes embodiments of the present invention with reference to the accompanying drawings in embodiments of the present invention. Terms used in embodiments of the present invention are merely intended to explain specific embodiments of the present invention, and are not intended to limit the present invention.

The following describes embodiments of this application with reference to the accompanying drawings. A person of ordinary skill in the art may learn that, with development of technologies and emergence of a new scenario, the technical solutions provided in embodiments of this application are also applicable to a similar technical problem.

In the specification, claims, and accompanying drawings of this application, the terms such as "first" and "second" are intended to distinguish between similar objects but do not necessarily indicate a specific order or sequence. It should be understood that the terms used in this way may be interchanged in appropriate cases, and this is merely a manner of distinguishing between objects with a same attribute for description in embodiments of this application. In addition, the terms "include", "have" and any other variants thereof are intended to cover the nonexclusive inclusion, so that a process, method, system, product, or device that includes a list of units is not necessarily limited to those units, but may include other units that are not expressly listed or are inherent to such a process, method, product, or device.

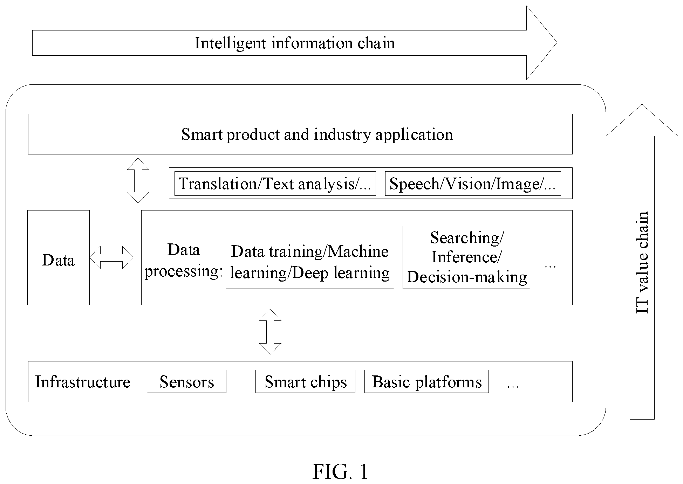

An overall working procedure of an artificial intelligence system is first described with reference to FIG. 1. FIG. 1 is a schematic diagram of a structure of an artificial intelligence main framework. The following describes the artificial intelligence main framework from two dimensions: an "intelligent information chain" (a horizontal axis) and an "IT value chain" (a vertical axis). The "intelligent information chain" reflects a process from obtaining data to processing the data. For example, the process may be a general process including intelligent information perception, intelligent information representation and formation, intelligent inference, intelligent decision-making, and intelligent execution and output. In this process, the data undergoes a refinement process of "data-information-knowledgeintelligence". The "IT value chain" from an underlying infrastructure and information (which provides and processes technology implementations) of artificial intelligence to an industrial ecology process of the system reflects values brought by artificial intelligence to the information technology industry.

(1) Infrastructure

The infrastructure provides computing capability support for the artificial intelligence system, implements communication with the external world, and implements support by using basic platforms. The infrastructure communicates with the outside by using sensors. A computing capability is provided by smart chips (hardware acceleration chips such as a CPU, an NPU, a GPU, an ASIC, and an FPGA). The basic platforms include related platforms, for example, a distributed computing framework and network, for assurance and support. The basic platforms may include a cloud storage and computing network, an interconnection network, and the like. For example, the sensor communicates with the outside to obtain data, and the data is provided to a smart chip for computing, where the smart chip is in a distributed computing system provided by the basic platform.

(2) Data

Data at an upper layer of the infrastructure indicates a data source in the field of artificial intelligence. The data relates to a graph, an image, speech, and text; and further relates to internet of things data of a conventional device. The internet of things data of the conventional device includes service data of an existing system, and perception data such as force, displacement, a liquid level, a temperature, and humidity.

(3) Data processing

Data processing usually includes a manner such as data training, machine learning, deep learning, searching, inference, or decision-making.

Machine learning and deep learning may be used to perform symbolic and formal intelligent information modeling, extraction, preprocessing, training, and the like on data.

Inference is a process of simulating a human intelligent inference manner and performing machine thinking and problem resolving with formal information based on an inference control policy in a computer or an intelligent system. A typical function is searching and matching.

Decision-making is a process of making a decision after intelligent information is inferred, and usually provides functions such as classification, ranking, and prediction.

(4) General capability

After data processing mentioned above is performed on the data, some general capabilities may further be formed based on a data processing result. For example, the general capabilities may be an algorithm or a general system for, for example, translation, text analysis, computer vision processing, speech recognition, and image recognition.

(5) Smart product and industry application

The smart product and industry application are products and applications of the artificial intelligence system in various fields. The smart product and industry application involve packaging overall artificial intelligence solutions, to productize and apply intelligent information decision-making. Application fields of the intelligent information decision-making mainly include smart terminals, smart transportation, smart health care, autonomous driving, safe city, and the like.

This application may be applied to a natural language processing field in the artificial intelligence field. The following describes a plurality of application scenarios in which a plurality of applications are implemented in products.

To better understand the solutions in embodiments of this application, the following briefly describes a possible application scenario in embodiments of this application with reference to FIG. 1 to FIG. 3.

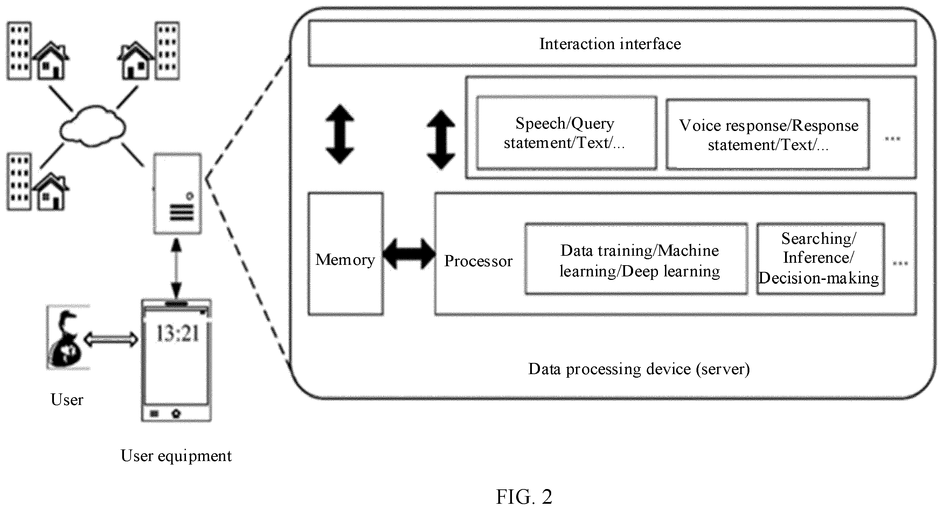

FIG. 2 shows a natural language processing system. The natural language processing system includes user equipment and a data processing device. The user equipment includes a smart terminal such as a mobile phone, a personal computer, or an information processing center. The user equipment is an initiating end of natural language data processing. As an initiator of a request for language questioning and answering, querying, or the like, a user usually initiates the request by using the user equipment.

The data processing device may be a device or server with a data processing function, such as a cloud server, a network server, an application server, or a management server. The data processing device receives, through an interaction interface, a question such as a query statement/speech/text from the smart terminal; then performs, by using a memory storing data and a processor processing data, language data processing in a manner of machine learning, deep learning, searching, inference, decision-making, or the like; and feeds back a processing result to the user equipment. The memory in the data processing device may be a general name, and includes a local storage and a database storing historical data. The database may be in the data processing device, or may be in another network server.

In the natural language processing system shown in FIG. 2, the user equipment may receive an instruction from the user. For example, the user equipment may receive a piece of text entered by the user, and initiate a request to the data processing device. Then, the data processing device executes a natural language processing application (for example, text classification, text inference, named entity recognition, or translation) on the piece of text obtained by the user equipment, to obtain a processing result (for example, a classification result, an inference result, a named entity recognition result, or a translation result) corresponding to the natural language processing application for the piece of text. For example, the user equipment may receive a piece of Chinese text entered by the user, and initiate a request to the data processing device. Then, the data processing device performs entity classification on the piece of Chinese text, to obtain an entity classification result for the piece of Chinese text. For example, the user equipment may receive a piece of Chinese text entered by the user, and initiate a request to the data processing device. Then, the data processing device translates the piece of Chinese text into English, to obtain an English translation of the piece of Chinese text.

In this embodiment of this application, the data processing device may receive, from the user equipment through the interaction interface, a performance upper limit parameter and a request to obtain a task model related to natural language processing (natural language processing, NLP). The performance upper limit parameter includes, but is not limited to, at least one of precision, a latency, or a model compression ratio. The data processing device may calculate, based on a trained scalable transformer model and a performance upper limit parameter that needs to be satisfied and that is uploaded by the user equipment, a size that is of a model and that is suitable for the user equipment when the performance upper limit parameter is met. Then, the data processing device may extract a subnetwork model in the same size as the model, and transmit the subnetwork to the user equipment.

In FIG. 2, the data processing device may perform the data processing method according to embodiments of this application.

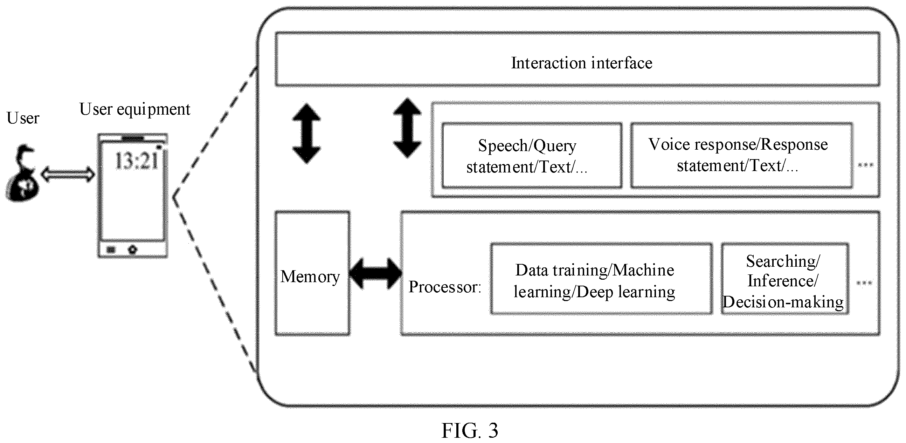

FIG. 3 shows another natural language processing system. In FIG. 3, user equipment is directly used as a data processing device. The user equipment can directly receive an input from a user, and the input is directly processed by hardware of the user equipment. A specific process is similar to that in FIG. 2. Refer to the foregoing descriptions, and details are not described herein again.

In the natural language processing system shown in FIG. 3, the user equipment may receive an instruction from the user. For example, the user equipment may receive a piece of text entered by the user, and then the user equipment executes a natural language processing application (for example, text classification, text inference, named entity recognition, or translation) on the piece of text, to obtain a processing result (for example, a classification result, an inference result, a named entity recognition result, or a translation result) corresponding to the natural language processing application for the piece of text. For example, the user equipment may receive a piece of Chinese text entered by the user, and perform entity classification on the piece of Chinese text, to obtain an entity classification result for the piece of Chinese text. For example, the user equipment may receive a piece of Chinese text entered by the user, and translate the piece of Chinese text into English, to obtain an English translation of the piece of Chinese text.

In this embodiment of this application, the user equipment may store a subnetwork model. Each time before an operating system (operating system, OS) or an application (application, APP) invokes the model, the user equipment may calculate, based on a current resource condition (including but not limited to at least one of current power consumption, a computing capability, and a storage parameter that are of a terminal-side device) of the user equipment, a suitable size of a model when the current resource condition of the user equipment is satisfied. The user equipment may input the suitable size that is of the model and that is obtained through calculation to the stored subnetwork model, to obtain a current state model by dynamic pruning and execute an inference task.

In FIG. 3, the user equipment may perform the data processing method according to embodiments of this application.

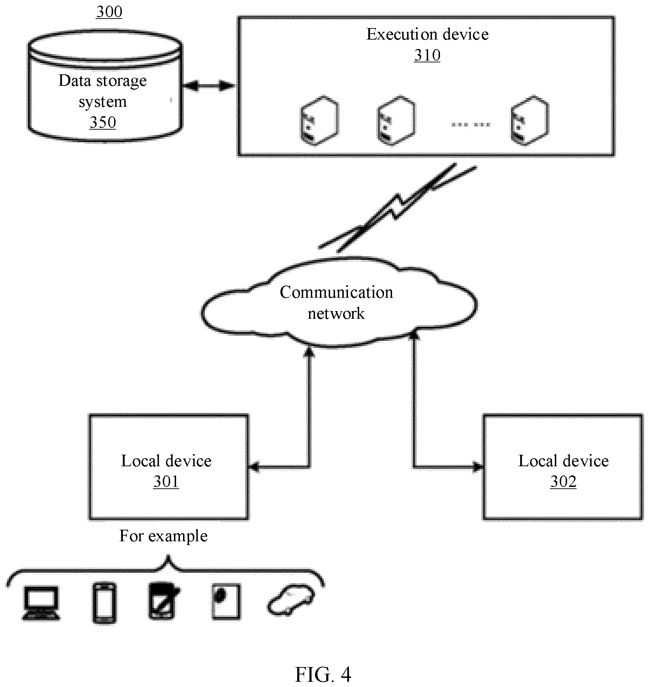

FIG. 4 is a schematic diagram of a device 300 related to natural language processing according to an embodiment of this application.

The user equipment in FIG. 2 and FIG. 3 may be specifically a local device 301 or a local device 302 in FIG. 4. The data processing device in FIG. 2 may be specifically an execution device 310 in FIG. 4. A data storage system 350 may store data to be processed by the execution device 310. The data storage system 350 may be integrated into the execution device 310, or may be disposed on a cloud or another network server.

The processors in FIG. 2 and FIG. 3 may perform data training/machine learning/deep learning by using a neural network model or another model, and execute a natural language processing application (for example, text classification, sequence labeling, reading comprehension, text generation, text inference, or translation) on a text sequence by using a final model that is obtained by performing training or learning with data, to obtain a corresponding processing result.

Embodiments of this application relate to massive application of a neural network. Therefore, for ease of understanding, the following first describes terms and concepts related to the neural network in embodiments of this application.

(1) Neural network

The neural network may include a neuron. The neuron may be an operation unit that uses xs and an intercept of 1 as an input. An output of the operation unit may be as follows:

$$output = f(\sum_{1}^{n} Ws * xs + b)$$

s=1, 2, ..., or n. n is a natural number greater than 1. Ws is a weight of xs. b is a bias of the neuron. f indicates an activation function (activation function) of the neuron. The activation function is used for introducing a non-linear characteristic into the neural network, to convert an input signal of the neuron into an output signal. The output signal of the activation function may be used as an input of a next convolutional layer. The activation function may be a sigmoid function. The neural network is a network composed of a plurality of single neurons that are connected together. An output of a neuron may be an input of another neuron. An input of each neuron may be connected to a local receptive field of a previous layer, to extract a feature of the local receptive field. The local receptive field may be a region including several neurons.

(2) Transformer layer

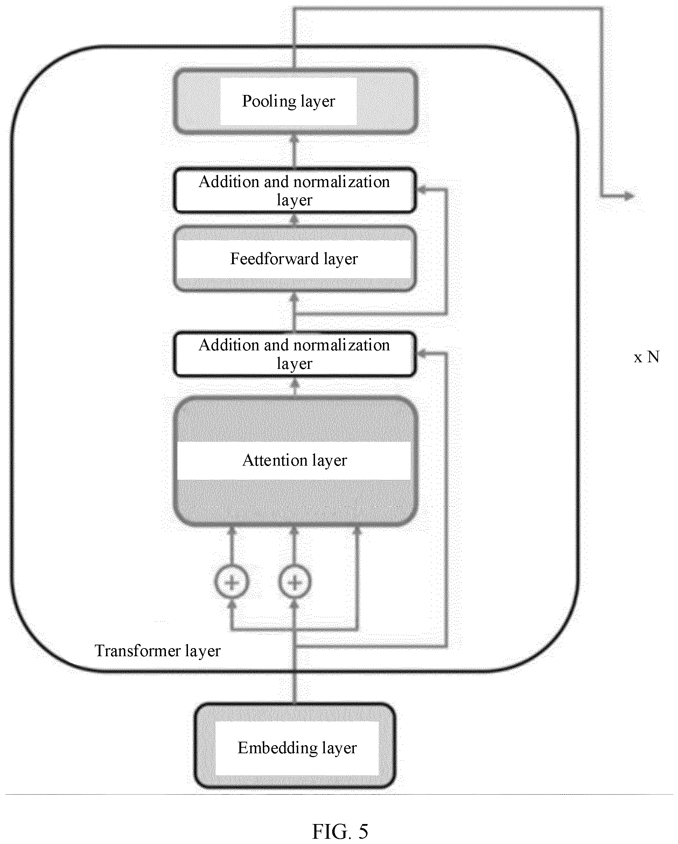

FIG. 5 is a schematic diagram of an architecture of a transformer layer. As shown in FIG. 5, a neural network includes an embedding layer and at least one transformer layer. The at least one transformer layer may be N transformer layers (N is an integer greater than 0). Each transformer layer includes an attention layer, an addition and normalization (add & norm) layer, a feedforward (feedforward) layer, and an addition and normalization layer where each two sequential layers in the foregoing layers are adjacent to each other. At the embedding layer, embedding processing is performed on a current input, to obtain a plurality of feature vectors. At the attention layer, P input vectors are obtained from a layer preceding the transformer layer; a first input vector in the P input vectors is used as a center, where the first input vector is any one of the P input vectors; and an intermediate vector corresponding to the first input vector is obtained based on a degree of correlation between each input vector within a preset attention window and the first input vector. In this way, P intermediate vectors corresponding to the P input vectors are determined. At the pooling layer, the P intermediate vectors are combined into Q output vectors. A plurality of output vectors obtained at a last transformer layer in the at least one transformer layer are used as feature representations of the current input.

The following describes the foregoing steps in detail with reference to specific examples.

First, at the embedding layer, embedding processing is performed on the current input, to obtain the plurality of feature vectors.

The embedding layer may be referred to as an input embedding (input embedding) layer. The current input may be a text input, for example, a piece of text or a sentence. The text may be Chinese text, or English text, or text in another language. After the current input is obtained, embedding processing may be performed on all words in the current input at the embedding layer, to obtain feature vectors of all the words. In some embodiments, the embedding layer includes an input embedding layer and a positional encoding (positional encoding) layer. At the input embedding layer, word embedding processing may be performed on all the words in the current input, to obtain word embedding vectors of all the words. At the positional encoding layer, positions of all the words in the current input may be obtained, to generate position vectors for the positions of all the words. In some examples, the positions of all the words may be absolute positions of all the words in the current input. For example, the current input is "what date should the Huabei debt be repaid", where a position of "what" may be represented as a first position, a position of "date" may be represented as a second position, and so on. In some examples, the positions of all the words may be positions of all the words relative to each other. For example, the current input is still "what date should the debt be repaid", where a position of "what" may be represented as preceding "date", a position of "date" may be represented as following "what" and preceding "should", and so on. When the word embedding vectors and the position vectors of all the words in the current input are obtained, the position vectors of all the words and the corresponding word embedding vectors may be combined to obtain feature vectors of all the words, namely, the plurality of feature vectors corresponding to the current input. The plurality of feature vectors may be represented as an embedding matrix with a preset dimension. For the plurality of feature vectors, a quantity of the feature vectors may be set to M, and the preset dimension may be a dimension of H. In this case, the plurality of feature vectors may be represented as an MxH embedding matrix.

Second, the P input vectors are obtained from a layer preceding a first transformer layer; a first input vector in the P input vectors is used as a center, where the first input vector is any one of the P input vectors; and the intermediate vector corresponding to the first input vector is obtained based on the degree of correlation between each input vector within the preset attention window and the first input vector. In this way, the P intermediate vectors corresponding to the P input vectors are determined. The attention layer may also be referred to as a multi-head attention (multi-head attention) layer. In an example, the attention layer may be a fixed window multi-headed attention (fixed window multi-head attention) layer.

In some embodiments, the first transformer layer may be a layer following the embedding layer, and the P input vectors are the plurality of feature vectors obtained from the embedding layer. In some embodiments, the at least one transformer layer in the neural network provided in this embodiment of this specification further includes a second transformer layer. The second transformer layer is a layer preceding the first transformer layer. In this case, the P input vectors are P output vectors that are output from the second transformer layer. At the last transformer layer in the neural network, the plurality of output vectors obtained through the foregoing steps may be used as the feature representations of the current input. The feature representation is a feature representation, of the current input, suitable for computer processing; and may be used for tasks such as text similarity, text classification, reading comprehension, and machine translation.

(3) Attention mechanism (attention mechanism)

The attention mechanism simulates an internal process of an observational behavior of a creature, and is a mechanism that aligns internal experience with external feelings to increase observation precision of some regions. The mechanism can quickly select high-value information from a large amount of information by using limited attention resources. The attention mechanism is widely used in natural language processing tasks, especially machine translation, because the attention mechanism can quickly extract an important feature of sparse data. A self-attention mechanism (self-attention mechanism) is improvement of the attention mechanism. The self-attention mechanism becomes less dependent on external information and is better at capturing an internal correlation of data or features. An essential idea of the attention mechanism may be rewritten as the following formula: $\text{Attention(source)} = \frac{\text{Query} * \text{Key}}{\sqrt{Lx}} * \text{Value}$

$Lx = \|\text{Source}\|$ represents a length of a source. The formula means that constituent elements in the source are assumed to be a series of data pairs. At this time, given an element query in a target (target), a weight coefficient of each key corresponding to a value is obtained by calculating similarity or a correlation between the query and each key. Then, weighted summation is performed on values, to obtain a final attention value. Therefore, in essence, the attention mechanism is to perform weighted summation on values of the elements in the source, and a query and key are used to calculate a weight coefficient of a corresponding value. Conceptually, attention may be understood as selecting a small amount of important information from a large amount of information, focusing on the important information, and ignoring most of unimportant information. A process of focusing is reflected in calculation of a weight coefficient. A greater weight indicates that a value corresponding to the weight is more focused. In other words, the weight indicates importance of information, and the value is the information corresponding to the weight. The self-attention mechanism may be understood as an intra attention (intra attention) mechanism. The attention mechanism occurs between the element query in the target and all the elements in the source. The self-attention mechanism is an attention mechanism that occurs between elements in a source or between elements in a target, and may also be understood as an attention calculation mechanism in a special case of Target=Source. A specific calculation process of the self-attention mechanism is the same except that a calculation object changes.

(4) Natural language processing (natural language processing, NLP)

Natural language (natural language) is human language, and natural language processing (NLP) is processing of the human language. Natural language processing is a process of systematic analysis, understanding, and information extraction of text data in an intelligent and efficient manner. By using NLP and components of NLP, massive chunks of text data can be organized, or numerous automated tasks can be performed, and various problems such as automatic summarization (automatic summarization), machine translation (machine translation, MT), named entity recognition (named entity recognition, NER), relation extraction (relation extraction, RE), information extraction (information extraction, IE), sentiment analysis, speech recognition (speech recognition), a question answering (question answering) system, and topic segmentation can be solved.

For example, there may be the following types of natural language processing tasks.

Sequence labeling: A model needs to provide a classification category for each word in a sentence based on a context. For example, sequence labeling is Chinese word segmentation, part-of-speech tagging, named entity recognition, or semantic role labeling.

Classification task: A classification value is output for an entire sentence. For example, the classification task is text classification.

Sentence relation inference: Two sentences are given, and whether the two sentences have a nominal relation is determined. For example, sentence relation inference is entailment, QA, semantic paraphrasing, or natural language inference.

Generative task: One piece of text is input, and another piece of text is generated. For example, the generative task is machine translation, text summarization, poem writing and sentence making, or picture description.

The following provides some natural language processing examples.

Word segmentation (word segmentation or word breaker, WB): Continuous natural language text is segmented into lexical sequences with semantic plausibility and integrity, to eliminate a cross ambiguity. Example sentence: zhi bi ye he shang wei bi ye de tong xue. Word segmentation 1: zhi bi ye he shang wei bi ye de tong xue. Word segmentation 2: zhi bi ye, he shang, wei bi ye de tong xue.

Named entity recognition (named entity recognition, NER): Entities (a person, a place, an institution, time, a work, and the like) having specific meanings in natural language text are recognized, to integrate unknown words at a granularity. Example sentence: tian shi ai mei li zai xian guan kan. Word segmentation: tian shi ai mei li, zai xian guan kan. Entity: tian shi ai mei li -> movie.

Part-of-speech tagging (part-of-speech tagging): A part of speech (noun, verb, adjective, or the like) is assigned to each word in natural language text. Dependency parsing (dependency parsing): Syntactic elements (subject, predicate, object, attributive, adverbial, complement, and the like) in a sentence are automatically analyzed, to eliminate a structural ambiguity. Comment: fangjian li hai ke yi xin shang ri chu. Ambiguity 1: fang jian hai ke yi. Ambiguity 2: ke yi xin shang ri chu. Parts of speech: fangjianli (subject), hai ke yi (predicate), xin shang ri chu (verbobject phrase).

Word vector and semantic similarity (word embedding & semantic similarity): Words are represented as vectors, and semantic similarity calculation is performed on the words based on the vectors, to solve a problem of linguistic similarity between the words. For example, which one (dai gua/cao mei) is xi gua similar to? Vectorized representation: xi gua (0.1222, 0.22333, ...). Similarity calculation: dai gua (0.115) and cao mei (0.325). Vectorized representation: (-0.333, 0.1223, ...) and (0.333, 0.3333, ...).

Text semantic similarity (text semantic similarity): Based on massive data in an entire network and a deep neural network technology, semantic similarity between pieces of text is calculated, to solve a problem of text semantic similarity. For example, which of the following is "che tou ru he fang zhi che pai" similar to: "qian che pai zen me zhuang" and "ru he ban li beijing pai zhao"? Vectorized representation: che tou ru he fang zhi che pai (0.1222, 0.22333, ...). Similarity calculation: qian che pai zen me zhuang (0.762) and ru he ban li bei jing pai zhao (0.486). Vectorized representation: (-0.333, 0.1223, ...) and (0.333, 0.3333, ...).

A model compression method provided in embodiments of this application relates to processing of natural language text. The model compression method may be specifically applied to data processing methods such as data training, machine learning, and deep learning, to perform symbolic and formal intelligent information modeling, extraction, preprocessing, training, and the like on training data and finally obtain a trained neural network model. In addition, the trained neural network model may be used in a data processing method provided in embodiments of this application. Input data (for example, to-be-processed language information) is input to the trained target neural network model, to obtain output data (for example, a processing result corresponding to a target task). It should be noted that a neural network training method and the data processing method that are provided in embodiments of this application are inventions generated based on a same idea, or may be understood as two parts in a system or two phases, such as a model training phase and a model application phase, of an overall procedure.

The model compression method provided in embodiments of this application is first described by using the model training phase as an example.

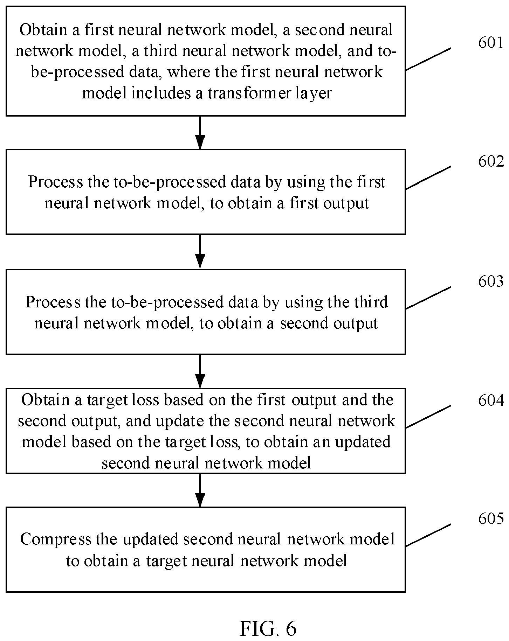

FIG. 6 is a schematic diagram of an embodiment of a model compression method according to an embodiment of this application. The data processing method provided in this embodiment of this application may be applied to a terminal device such as a mobile phone, a tablet computer, a laptop computer, or a smart wearable device. As shown in FIG. 6, a model compression method provided in this embodiment of this application includes the following steps.

601. Obtain a first neural network model, a second neural network model, and a third neural network model, where the first neural network model includes a transformer (transformer) layer, the second neural network model includes the first neural network model or a neural network model obtained by performing parameter update on the first neural network model, and the third neural network model is obtained by compressing the second neural network model.

In this embodiment of this application, parameter fine-tuning or knowledge distillation may be performed on a pre-trained language model, to obtain the first neural network model, where processing precision of the first neural network model during target task processing is higher than a preset value. The preset value may be adaptively set for different types of tasks. The preset value may represent high processing precision.

In this embodiment of this application, the first neural network model may be a model obtained by performing processing such as parameter fine-tuning or knowledge distillation on the pre-trained language model. Compared with an earlier model, the pre-trained language model has a stronger representation learning, autoregression, or autoencoding pre-training approach. This enables the pre-trained language model to capture more context information and learn better representations of words. In addition, the pre-trained language model features good transferability. A "pre-training-fine-tuning" mode can be applied to various NLP tasks and generally achieve a current best effect quickly without a huge amount of training data. Furthermore, numerous current applications and researches (for example, out-of-domain detection) indicate that the current pre-trained language model generalizes well to a large amount of domain data.

Specifically, a training device may design, for a specific task by using a corpus (for example, a task training corpus or a corpus generated by data enhancement), a network structure downstream of the pre-trained language model (for example, BERT (bidirectional encoder representation from transformers), Nezha, or TinyBERT), and obtain the first neural network model in various manners (for example, parameter fine-tuning and knowledge distillation). It is equivalent to that the first neural network model is obtained by performing, for the specific task, fine-tuning or knowledge distillation on the pre-trained language model. The first neural network model has good performance on the specific task.

In this embodiment of this application, the first neural network model may include the transformer layer. In other words, the first neural network model may be a neural network model based on the transformer layer. Optionally, the first neural network model may be an NLP model based on the transformer layer.

Next, an example structure of the first neural network model is described.

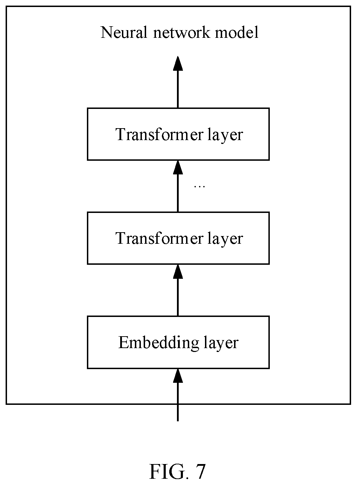

FIG. 7 is a schematic diagram of a structure of a neural network model according to an embodiment of this application. The neural network model shown in FIG. 7 may be the first neural network model, the second neural network model, and the third neural network model in this embodiment of this application. As shown in FIG. 7, the neural network model based on a transformer layer may include an embedding layer and a plurality of transformer layers, where the embedding layer and the plurality of transformer layers are sequentially connected. As understood by a person skilled in the art, a transformer model is mostly used to execute a natural language processing NLP task. It should be understood that the structure in FIG. 7 is merely an example, and a quantity of transformer layers may be set as required. For example, only one transformer layer may be set, or more transformer layers may be set. The neural network model determines, based on N output vectors obtained at the transformer layers, feature representations of a current input.

The following describes a specific working process of each layer.

At the embedding layer, embedding processing is performed on the current input, to obtain a plurality of feature vectors. A core characteristic of the transformer model is a unique attention mechanism used by the transformer model. During processing of a natural language, for example, a sentence, the transformer model uses the attention mechanism to assign different attention coefficients to word vectors in the sentence. Therefore, impact of a context on words in the sentence is considered more comprehensively. At the embedding layer, N embedding vectors $X_1$ are obtained based on node features and position code of nodes in a current sequence. At the transformer layer, the N embedding vectors are obtained is connected to the embedding layer. The N embedding vectors are obtained from the embedding layer and used as input vectors; the input vectors are aggregated based on a degree of correlation between the N input vectors, to obtain N output vectors; and the N output vectors are output to a following transformer layer. At a transformer layer, an output of a previous layer is obtained and used as an input vector, and operations similar to those of a previous transformer layer are performed.

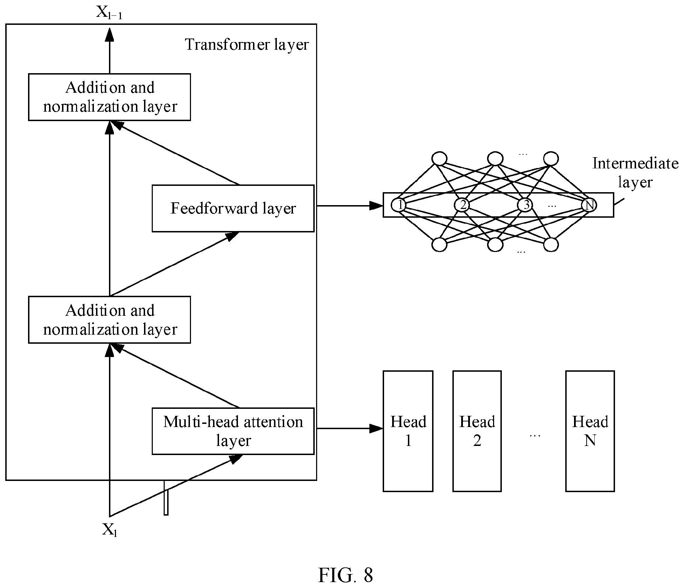

FIG. 8 is a schematic diagram of a structure of a transformer layer. For the transformer layers of the neural networks in embodiments of this application, refer to the structure shown in FIG. 8. As shown in FIG. 8, the transformer layer includes a multi-head attention layer, an addition and normalization (add & norm) layer, a feedforward (feedforward) layer, and an addition and normalization layer that are sequentially adjacent to each other.

At the multi-head attention layer, N input vectors $X_1$ are obtained from a layer preceding the multi-head attention layer, where the N input vectors $X_1$ may be represented as a matrix X; and the vectors are transformed based on a degree of correlation between the vectors by using a self-attention mechanism, to obtain N output vectors, where the N output vectors may be represented as a matrix Y It may be understood that, when the multi-head attention layer is a layer directly connected to an embedding layer, for example, the transformer layer directly connected to the embedding layer in FIG. 7, an input vector obtained by the multi-head attention layer is an embedding vector that is output by the embedding layer. When the multi-head attention layer is a multi-head attention layer included in a following transformer layer, for example, a multi-head attention layer included in a transformer layer directly connected to a previous transformer layer in FIG. 7, an input vector obtained by the multi-head attention layer is an output vector of a previous transformer layer. At the multi-head attention layer, an MHA layer based on multi-head attention (multi-head attention, MHA) includes a plurality of attention heads heads (a head 1, a head 2, ..., and a head N that are shown in FIG. 8).

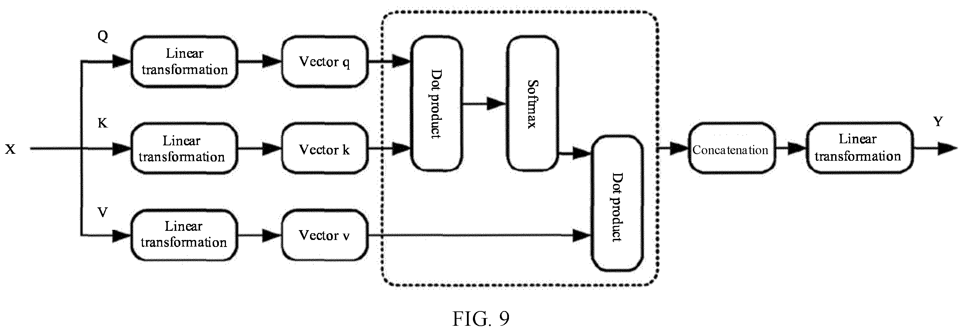

FIG. 9 is a schematic diagram of an operation of an attention head. The schematic diagram shows how the attention head (head) transforms an input matrix X into an output matrix Y As shown in FIG. 9, each input vector $X_i$ in N input vectors $<X_1, X_2, ..., X_N>$ is transformed by using a first transformation matrix Q, a second transformation matrix K, and a third transformation matrix V separately, to obtain a first intermediate vector (a vector q), a second intermediate vector (a vector k), and a third intermediate vector (a vector v) that correspond to each input vector. During the operation, linear transformation may be performed, by using the first transformation matrix Q, the second transformation matrix K, and the third transformation matrix V separately, on an input matrix X composed of the N input vectors, to obtain a matrix Q, a matrix K, and a matrix V of the input matrix; and then the matrices are separately decomposed, to obtain the vector q, the vector k, and the vector v that correspond to each input vector. A degree of correlation between any $i^{th}$ input vector $X_i$ in the N input vector and each input vector $X_j$ is determined based on a point product of a first intermediate vector (a vector q, $q_i$) corresponding to the $i^{th}$ input vector and a second intermediate vector (a vector k, $k_j$) corresponding to each input vector $X_j$. The point product of $q_i$ and $k_j$ may be directly determined as the degree of correlation. However, more typically, the point product is first divided by a constant, then a softmax operation is performed, and an operation result is used as the degree of correlation between the input vectors $X_i$ and $X_j$, as shown in the following formula:

$$\alpha_{i,j} = \mathrm{softmax}\left(\frac{q_i \cdot k_j}{\sqrt{d_k}}\right)$$

Then, a degree $\alpha_{i,j}$ of correlation between the $i^{th}$ input vector $X_i$ and each input vector $X_j$ may be used as a weighting factor, and weighted combination is performed on a third intermediate vector (a vector v, $v_j$) corresponding to each input vector $X_j$, to obtain an $i^{th}$ combined vector $C_i$ corresponding to the $i^{th}$ input vector $X_i$, as shown in the following formula:

$$C_i = \sum_{j=1}^{N} \alpha_{i,j} v_j$$

Then, a vector sequence $<Ci, C_2, ..., C_N>$ or a matrix C of N combined vectors corresponding to the N input vectors may be obtained. N output vectors may be obtained based on the sequence of the combined vectors. Specifically, in an embodiment, the vector sequence of the N combined vectors may be directly used as the N output vectors, that is, $Y_i = C_i$. In this case, an output matrix Y is the combined vector matrix C, which may also be written as:

$$Y = \mathrm{softmax}\left(\frac{QK^T}{\sqrt{d_k}}\right) V$$

The foregoing is a description of a processing procedure of an attention head. In an MHA architecture, the MHA layer maintains m sets of transformation matrices, and each set of transformation matrices includes a first transformation matrix Q, a second transformation matrix K, and a third transformation matrix V Therefore, the foregoing operations may be performed in parallel, to obtain m combined vector sequences (namely, m matrices C). Each vector sequence includes N combined vectors obtained based on one set of transformation matrices. In this case, at the MHA layer, the obtained m combined vector sequences are concatenated, to obtain a concatenated matrix; and then the concatenated matrix is transformed by using a fourth transformation matrix W, to obtain the final output matrix Y Corresponding N output vectors $<Y_1, Y_2, ..., Y_N>$ are obtained by decomposing the output matrix Y. In the foregoing operation process, at the MHA layer, a transformation operation is performed based on a degree of correlation between the N input vectors, to obtain the N output vectors.

As shown in FIG. 8, the transformer layer includes the feedforward layer. The feedforward layer includes an input layer, an intermediate layer intermediate layer, and an output layer. The intermediate layer includes a plurality of neurons.

As described above, the neural network model may include a plurality of transformer layers. In an embodiment, the plurality of transformer layers may be stacked and connected in a residual network manner, to form the neural network model.

When there are a plurality of transformer layers, in an embodiment, the neural network model may aggregate N output vectors obtained at each of the plurality of transformer layers, to obtain feature vectors corresponding to a current node. In another embodiment, the neural network model may extract only N output vectors obtained at a last transformer layer, and aggregate the N output vectors, to obtain feature vectors of a current node.

It may be understood that the neural network model depends on a large quantity of parameters, for example, parameters in the foregoing transformation matrices (the matrix Q, the matrix K, the matrix V, and the like) in a calculation process for determining the feature vectors of the current node. These parameters may be determined by training the neural network model. In different embodiments, the neural network model may be trained by using different tasks.

In this embodiment of this application, the training device may first use the first neural network model as a teacher (teacher) model, initialize the first neural network model to obtain a student (student) model (the second neural network model), and compress the second neural network model to obtain the third neural network model.

It should be understood that, during initial iteration, the second neural network model may be the same as the first neural network model. In other words, the third neural network model may be obtained by compressing the first neural network model. In a subsequent iteration process, the first neural network model may remain unchanged, a target loss is constructed based on outputs of the first neural network model and the third neural network model, and the second neural network model is updated based on the target loss. This is equivalent to that the second neural network model is obtained by performing parameter update on the first neural network model.

In this embodiment of this application, the second neural network model may be compressed to obtain the third neural network model. Compression may include at least one of model pruning, weight sharing, kernel sparsity (regular), quantization, binarization, low-rank decomposition, and the like. In an implementation, the second neural network model may be quantized, to obtain the third neural network model.

In this embodiment of this application, model quantization is neural network quantization (neural network quantization), and is a model compression technology for converting floating-point storage (operations) into integer storage (operations). For example, a model parameter of a model is originally represented by using float32 (a 32-bit floating point). After quantization, the model parameter of the model is represented by using int8 (an 8-bit fixed point). Model quantization increases an operation speed of a model at the cost of a small precision loss.

Model quantization is essentially conversion/mapping between data of two data types. In an implementation of converting floating-point data (data whose data type is a floating point) into fixed-point data (data whose data type is a fixed point), the following formula may be used:

$$Q = \frac{R}{S} + Z$$

R represents floating-point data that is input, Q represents fixed-point data obtained by quantizing the floating-point data R, Z represents a value of a zero point (Zero Point), and S represents a scale. It can be seen that conversion between these two data can be performed after S and Z are determined. There are many manners of determining S and Z, for example:

$$S = \frac{R_{max} - R_{min}}{Q_{max} - Q_{min}},$$

and

$$Z = Q_{max} - R_{max}/S$$

$R_{max}$ represents a maximum value of the floating-point data that is input. $R_{min}$ represents a minimum value of the floating-point data that is input. $Q_{max}$ represents a maximum value of the fixed-point data. Qmin represents a minimum value of the fixed-point data.

Conversion between fixed-point data with different quantities of bits may be performed in the foregoing manner of conversion between the floating-point data and the fixed-point data. Alternatively, conversion between the fixed-point data with different quantities of bits may be performed in another conversion manner in the prior art. Details are not described herein.

In an implementation, conversion between 4-bit and 8-bit may be performed in the foregoing conversion manner. In an implementation, conversion from floating-point data into 2-bit (1-bit) may be performed by using the following formula:

$$f(x) = \begin{cases} 1, x \geq T \\ 0, -T \leq x < T \\ -1, x \leq -T \end{cases}$$

The 2-bit may be represented as three numbers: -1, 0, and 1. T is a threshold. When the floating-point data is greater than or equal to T, 2-bit fixed-point data obtained by conversion is 1. If the floating-point data is less than -T, 2-bit fixed-point data obtained by conversion is converted into -1. If the floating-point data is another value, 2-bit fixed-point data obtained by conversion is converted into 0. A manner of conversion into the 1-bit data is similar to the manner of conversion into the 2-bit data, but fixed-point values of the 1-bit data are only -1 and 1, and a value of T is 0.

In this embodiment of this application, in each iterative training process, a loss may be constructed based on an output of a compressed model and an output of the first neural network; parameter update is performed, on a model before compression, to obtain an updated model; and the updated model is compressed, to obtain a compressed model. The updated model and the compressed model that are obtained may be used in a next iteration process. In an $(i-1)^{th}$ iterative training process, the second neural network model is an updated model; the third neural network model is a compressed model; and the second neural network model and the third neural network model may be used in a next iteration process.

602. Process to-be-processed data by using the first neural network model, to obtain a first output.

603. Process the to-be-processed data by using the third neural network model, to obtain a second output.

In this embodiment of this application, the to-be-processed data may be one of audio data, text data, and image data. The first neural network model and the third neural network model may be transformer-based natural language processing models. Correspondingly, the to-be-processed data may be audio data. In this embodiment of this application, the first neural network model and the third neural network model may alternatively be models having a capability of processing other tasks, for example, image classification and target recognition. Correspondingly, the to-be-processed data may be data of different types.

In this embodiment of this application, in a feedforward process, the to-be-processed data may be processed by using the first neural network model and the third neural network model, to obtain the first output and the second output. When the first neural network model and the third neural network model are transformer-based neural networks, the first output may include at least one of an output of an embedding layer in the first neural network model, an output of any transformer layer in the first neural network model, and an output of an output layer in the first neural network model.

When the third neural network is obtained by quantizing the second neural network model or performing other processing that does not change a network structure, the first neural network model and the third neural network model may have a same network structure, and only values of parameters in networks are different. Correspondingly, the first output and the second output are outputs of layers, at a same position, in the first neural network model and the third neural network model.

For example, the first output may be an output of the embedding layer in the first neural network model, an output of a third transformer layer from the embedding layer in the first neural network model, and an output of the output layer in the first neural network model; and the second output is an output of an embedding layer in the third neural network model, an output of a third transformer layer from the embedded layer in the third neural network model, and an output of an output layer in the third neural network model.

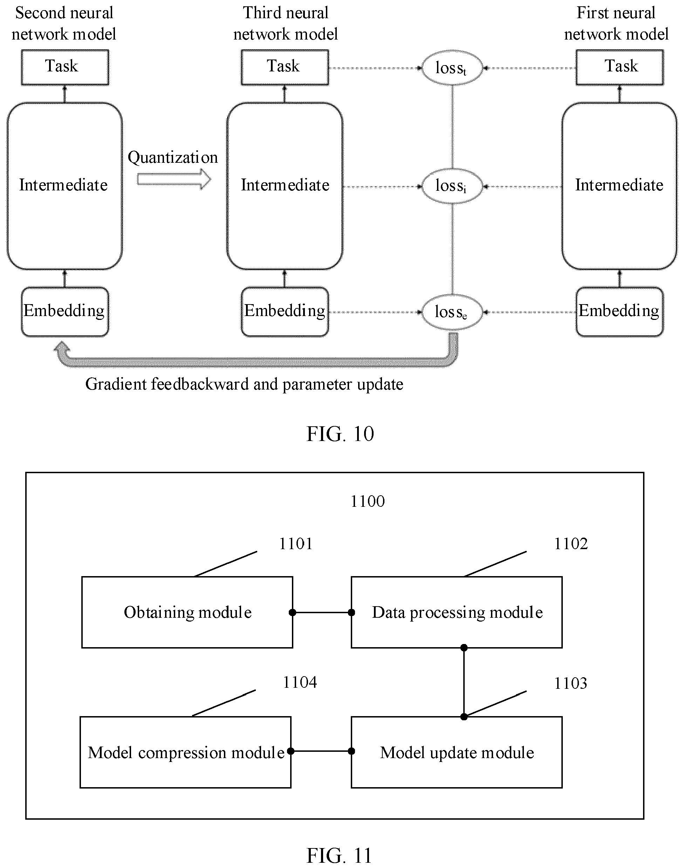

More specifically, as shown in FIG. 10, a target loss (including $loss_e$, loss;, and losst shown in FIG. 10) may be constructed based on outputs of an embedding (embedding) layer, an intermediate (intermediate) layer, and an output layer (or referred to as task layers) in the first neural network model and outputs of an embedding layer, an intermediate layer, and an output layer in the third neural network model. Gradient feedbackward and parameter update are performed on the second neural network model based on the target loss.

604. Obtain a target loss based on the first output and the second output, and update the second neural network model based on the target loss, to obtain an updated second neural network model.

In this embodiment of this application, after the training device obtains the first output and the second output, the training device may construct the target loss based on the first output and the second output, and update the second neural network model based on the target loss, to obtain the updated second neural network model.

In this embodiment of this application, during initialization, the second neural network model may be set to be consistent with the first neural network model. A model size of the third neural network model obtained by compressing the second neural network model and/or computing resources required for an operation model are reduced. However, corresponding model processing precision may also be reduced. To improve model processing precision of the third neural network model, the target loss may be constructed based on the outputs of the first neural network model and the third neural network model, and a model parameter of the second neural network model may be updated based on the target loss. As a result, model processing precision of a compressed second neural network model (referred to as a target neural network in subsequent embodiments) is close to that of the first neural network model, and a target neural network model has higher model processing precision than the third neural network model.

In this embodiment of this application, although the target loss is obtained based on the outputs of the first neural network model and the third neural network model, the target loss is used to update the second neural network model. This is because the third neural network model is a model obtained by quantizing the second neural network model, and a parameter of the third neural network model is expressed by using several fixed parameters. If the third neural network model is updated based on the target loss, the parameter of the third neural network model can be changed only among several fixed parameters, to ensure that the size of the third neural network model does not change or does not change much. Model precision can be better improved only when a parameter of a model is updated at a small granularity (for example, is continuous and non-discrete). For example, if the parameter of the third neural network model is changed only among several fixed parameters (0, -1, 1), the parameter of the third neural network may be changed from 0 to -1 or from 0 to 1 during update of the parameter, to ensure that the size of the third neural network model does not change or does not change much. If the parameter of the third neural network model is changed from -1 to 0 or from -1 to 1, or is changed from 1 to -1 or from 1 to 0, data processing precision of the third neural network model may be greatly reduced.

In this embodiment of this application, the second neural network model is updated based on a first target loss, to obtain the updated second neural network model. The second neural network model is an original model before quantization. Therefore, the second neural network model may be updated by using continuous (non-discrete) values. As a result, the model processing precision of the compressed second neural network model (referred to as the target neural network in the subsequent embodiments) is close to that of the first neural network model, and the target neural network model has higher model processing precision than the third neural network model.

605. Compress the updated second neural network model to obtain the target neural network model.

In this embodiment of this application, the updated second neural network model may be quantized to obtain the target neural network model.

In this embodiment of this application, second to-be-processed data may further be processed by using the first neural network model, to obtain a third output. The second to-be-processed data may be processed by using the target neural network model, to obtain a fourth output. A second target loss may be determined based on the third output and the fourth output, and the updated second neural network model may be updated based on the second target loss, to obtain a fourth neural network model. The fourth neural network model may be compressed to obtain an updated target neural network model. The foregoing steps may be repeated until a target neural network model satisfies a requirement for specific model precision.

In this embodiment of this application, the model compression method is provided. The method includes: obtaining the first neural network model, the second neural network model, and the third neural network model, where the first neural network model includes the transformer (transformer) layer, the second neural network model includes the first neural network model or a neural network model obtained by performing parameter update on the first neural network model, the third neural network model is obtained by compressing the second neural network model; processing first to-be-processed data by using the first neural network model, to obtain the first output; processing the first to-be-processed data by using the third neural network model, to obtain the second output; determining the first target loss based on the first output and the second output, and updating the second neural network model based on the first target loss, to obtain the updated second neural network model; and compressing the updated second neural network model to obtain the target neural network model. This embodiment is different from a conventional model compression manner. In this embodiment, feedforward is performed on a compressed model (the third neural network model), a target error is calculated, and parameter update is performed, based on the target error, on a model (the second neural network model) before compression. As a result, the model processing precision of the compressed second neural network model (the target neural network) is close to that of the first neural network model. The target neural network model has higher model processing precision than the third neural network model.

The first neural network model may be applied to a GLUE natural language understanding task. For example, the first neural network model may be a 32-bit BERT model. The first neural network model may be compressed into a model whose parameter is of 2 bits and activation is of 8 bits.

Specifically, training data of each task may be obtained, including a training set, a validation set, and a test set. Based on an amount of data of each task, data of the training set is expanded by 5 to 20 times. An expansion method may be, for example, performing synonym replacement and predicting a masked portion by using a pre-trained language model such as BERT. Then, an encoding layer is initialized by using a BERT-base model, and a task layer (a classifier) is added downstream of the encoding layer, to establish a network structure. A network is fine-tuned on the training set, and validation is performed on the validation set. A model with best performance on the validation set is stored as the first neural network model.

Then, the first neural network model may be used as a teacher model T, and a parameter of the first neural network model is fixed. Each time data is input, the network performs calculation and outputs a result. The teacher model T is quantized to obtain the second neural network model (a student model S), and the student model S is quantized to obtain the third neural network model (a model S').

For quantization of the student model S, 2-bit quantization may be performed on a parameter of the network. For example, it is assumed that W is a 3x3 matrix, there are three ($2^2$-1) values for each parameter of the model after quantization, which is represented as follows:

$$Q(W)=\alpha \begin{pmatrix} 1 & 0 & -1 \\ -1 & 1 & 0 \\ 0 & -1 & 1 \end{pmatrix},$$

where Q represents a quantization function, and $\alpha>0$.

8-bit quantization may be performed on inputs, activations, that participate in matrix multiplication. After quantization, value ranges of the activations each include 255 values ($2^8$-1). For a form, refer to the foregoing manner. In this way, the model S' is obtained.

Then, expanded data sets may be input to the models T and S', to obtain an output result of each layer of each of the models. Fitting errors are calculated layer by layer, including a fitting error loss, of an embedding layer, a sum $loss_{trm}$ of fitting errors of 12 transformer layers, and a fitting error losst of a classification layer. $loss=loss_e+loss_{trm}+loss_t$ is used as an optimization objective of S'. In a feedbackward process, a gradient of each module of the model is calculated, and parameter update is performed on the model S.

The foregoing process is repeated until the model converges. The model S' with best performance on the validation set is saved.

The 32-bit model in the foregoing example is evaluated on eight common tasks on a GLUE website, and scores 78.2. The model on the foregoing tasks is compressed by using the method in the embodiment. A compressed model is evaluated in the same way, and scores 76.9.

| Model | Model size (MB) | GLUE benchmark score |
|---|---|---|
| 32-bit BERT | 418 | 78.2 |
| 2-bit BERT | 28 | 76.9 |

For another example, the first neural network model may be a 32-bit TinyBERT model. The first neural network model may be compressed into a model whose parameter is of 8 bits and activation is of 8 bits.

Specifically, a natural language understanding module of a dialog system needs to perform intent classification and slot extraction on input text, and input text data is generally a natural language. For example, a sentence is "How is the weather in Beijing tomorrow?" For this sentence, an intent is weather query; a slot is a segment of text; a date is "tomorrow"; and a location is "Beijing".

| Text | Intent | Slot |
|---|---|---|
| How is the weather in Beijing tomorrow? | Weather query | Date=Tomorrow; location=Beijing |

A large quantity of existing manually-annotated corpuses are divided into training sets and validation sets at a ratio of 4:1. For a corpus in the training set, some words are randomly masked from text, and are predicted by using a BERT model, to obtain an enhanced corpus.

A unified model for intent classification and slot extraction on an NLU task is obtained based on the data sets and the

BERT model by using a TinyBERT training manner.

8-bit quantization is performed on a parameter of the TinyBERT model. Fitting errors that need to be optimized include a fitting error of an embedding layer, fitting errors of four transformer layers (the TinyBERT model is a four-layer model) in the middle, and fitting errors of two task layers, namely, a fitting error $loss_{int}$ that is of a task layer and that is used for intent classification and a fitting error $loss_{slot}$ that is of a task layer and that is used for slot extraction. For other similarities, refer to the compression process of the BERT model in the foregoing embodiment. Details are not described herein.

In the foregoing example, the TinyBERT model on the NLU task can be compressed by three times, and indicators of intent classification and slot extraction decrease by less than 1%.

| Model | Model size (MB) | Intent accuracy | Slot f1 value |
|---|---|---|---|
| 32-bit TinyBERT | 44 | 98.5 | 97.9 |
| 8-bit TinyBERT | 11 | 98.4 | 97.5 |

FIG. 11 is a schematic diagram of a model compression apparatus 1100 according to an embodiment of this application. As shown in FIG. 11, the model compression apparatus 1100 provided in this application includes an obtaining module 1101, a data processing module 1102, a model update module 1103, and a model compression module 1104.

The obtaining module 1101 is configured to obtain a first neural network model, a second neural network model, and a third neural network model, where the first neural network model includes a transformer (transformer) layer, the second neural network model includes the first neural network model or a neural network model obtained by performing parameter update on the first neural network model, and the third neural network model is obtained by compressing the second neural network model.

The data processing module 1102 is configured to: process first to-be-processed data by using the first neural network model, to obtain a first output; and

process the first to-be-processed data by using the third neural network model, to obtain a second output.

The model update module 1103 is configured to: determine a first target loss based on the first output and the second output, and update the second neural network model based on the first target loss, to obtain an updated second neural network model.

The model compression module 1104 is configured to compress the updated second neural network model to obtain a target neural network model.

In a possible implementation, a difference between processing results obtained by processing same data by using the second neural network model and the first neural network model falls within a preset range.

In a possible implementation, a difference between processing results obtained by processing same data by using the updated second neural network model and the first neural network model falls within the preset range.

In a possible implementation, the third neural network model is obtained by quantizing the second neural network model, and the model compression module is configured to quantize the updated second neural network model to obtain the target neural network model.

In a possible implementation, the second neural network model and the third neural network model each include an embedding layer, a transformer layer, and an output layer; the first output is an output of a target layer in the second neural network model; the second output is an output of a target layer in the third neural network model; and the target layer includes at least one of the embedding layer, the transformer layer, and the output layer.

In a possible implementation, the data processing module is configured to: process second to-be-processed data by using the first neural network model, to obtain a third output; and process the second to-be-processed data by using the target neural network model, to obtain a fourth output.

The model update module is configured to: determine a second target loss based on the third output and the fourth output, and update the updated second neural network model based on the second target loss, to obtain a fourth neural network model.

The model compression module is configured to compress the fourth neural network model to obtain an updated target neural network model.

In a possible implementation, the first to-be-processed data includes one of audio data, text data, and image data.

In a possible implementation, the obtaining module is configured to perform parameter fine-tuning or knowledge distillation on a pre-trained language model, to obtain the first neural network model, where processing precision of the first neural network model during target task processing is higher than a preset value.

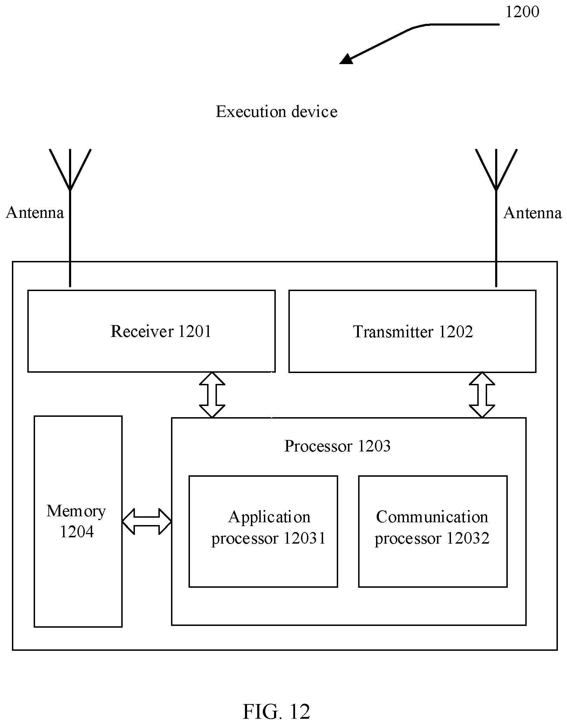

The following describes an execution device provided in an embodiment of this application. FIG. 12 is a schematic diagram of a structure of an execution device according to an embodiment of this application. An execution device 1200 may be specifically a mobile phone, a tablet computer, a laptop computer, a smart wearable device, a server, and the like. This is not limited herein. The execution device 1200 may be provided with the data processing apparatus in the embodiment corresponding to FIG. 11, to implement the data processing functions in the embodiment corresponding FIG. 10. Specifically, the execution device 1200 includes a receiver 1201, a transmitter 1202, a processor 1203, and a memory 1204 (where there may be one or more processors 1203 in the execution device 1200, and one processor 1203 is used as an example in FIG. 12). The processor 1203 may include an application processor 12031 and a communication processor 12032. In some embodiments of this application, the receiver 1201, the transmitter 1202, the processor 1203, and the memory 1204 may be connected through a bus or in another manner.

The memory 1204 may include a read-only memory and a random access memory, and provide an instruction and data to the processor 1203. A part of the memory 1204 may further include a non-volatile random access memory (non-volatile random access memory, NVRAM). The memory 1204 stores a processor and operation instructions, an executable module, or a data structure; or a subset thereof; or an extended set thereof. The operation instructions may include various operation instructions used to implement various operations.

The processor 1203 controls an operation of the execution device. During specific application, the components of the execution device are coupled together through a bus system. In addition to a data bus, the bus system may further include a power bus, a control bus, a status signal bus, and the like. However, for clarity of description, various types of buses in the figure are referred to as the bus system.

The method disclosed in embodiments of this application may be applied to the processor 1203, or may be implemented by the processor 1203. The processor 1203 may be an integrated circuit chip with a signal processing capability. During implementation, the steps of the foregoing method may be completed by using a hardware integrated logic circuit in the processor 1203 or instructions in the form of software. The processor 1203 may be a general-purpose processor, a digital signal processor (digital signal processor, DSP), a microprocessor, or a microcontroller. The processor 1203 may further include an application-specific integrated circuit (application-specific integrated circuit, ASIC), a field programmable gate array (field programmable gate array, FPGA) or another programmable logic device, a discrete gate or transistor logic device, or a discrete hardware component. The processor 1203 may implement or perform the method, the steps, and the logical block diagrams disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by a combination of hardware and software modules in a decoding processor. The software module may be located in a mature storage medium in the art, such as a random access memory, a flash memory, a read-only memory, a programmable read-only memory, an electrically erasable programmable memory, or a register. The storage medium is located in the memory 1204, and the processor 1203 fetches information in the memory 1204, and completes the steps of the foregoing method in combination with its hardware.

The receiver 1201 may be configured to receive input digit or character information, and generate a signal input related to related setting and function control of the execution device. The transmitter 1202 may be configured to output digital or character information through a first interface. The transmitter 1202 may be further configured to send an instruction to a disk group through the first interface, to modify data in the disk group. The transmitter 1202 may further include a display device such as a display screen.

In this embodiment of this application, in one case, the processor 1203 is configured to perform the data processing method performed by the execution device in the embodiment corresponding to FIG. 7.

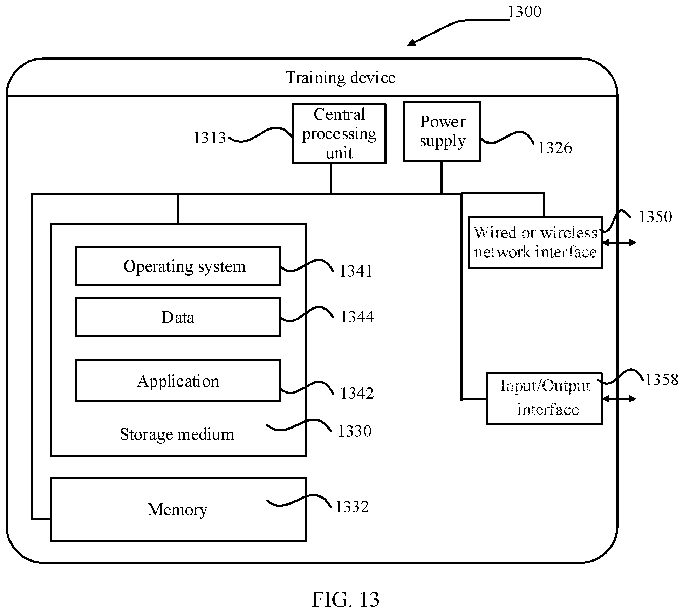

An embodiment of this application further provides a training device. FIG. 13 is a schematic diagram of a structure of a training device 1300 according to an embodiment of this application. Specifically, a training device 1300 is implemented by one or more servers. The training device 1300 may differ greatly due to different configurations or performance, and may include one or more central processing units (central processing units, CPUs) 1313 (for example, one or more processors) and a memory 1332, one or more storage media 1330 (for example, one or more massive storage devices) that store an application program 1342 or data 1344. The memory 1332 and the storage medium 1330 may be transient storages or persistent storages. A program stored in the storage medium 1330 may include one or more modules (not shown in the figure), and each module may include a series of instruction operations on the training device. Further, the central processing unit 1313 may be configured to communicate with the storage medium 1330, and perform a series of instruction operations in the storage medium 1330 on the training device 1300.

The training device 1300 may further include one or more power supplies 1326, one or more wired or wireless network interfaces 1350, one or more input/output interfaces 1358, or one or more operating systems 1341, such as Windows Server™, Mac OS X™, Unix™, Linux™ and FreeBSD™.

Specifically, the training device may perform the model compression method performed by the execution device in the embodiments corresponding to FIG. 5 and FIG. 8.

An embodiment of this application further provides a computer program product. When the computer program product runs on a computer, the computer is enabled to perform steps performed by the execution device or steps performed by the training device.

An embodiment of this application further provides a computer-readable storage medium. The computer-readable storage medium stores a program used for signal processing. When the program is run on a computer, the computer is enabled to perform steps performed by the execution device or steps performed by the training device.

The execution device, the training device, or the terminal device in embodiments of this application may be specifically a chip. The chip includes a processing unit and a communication unit. The processing unit may be, for example, a processor, and the communication unit may be, for example, an input/output interface, a pin, or a circuit. The processing unit may execute computer-executable instructions stored in a storage unit, so that a chip in the execution device performs the data processing method described in the embodiments, or a chip in the training device performs the data processing method described in the embodiments. Optionally, the storage unit is a storage unit in the chip, for example, a register or a buffer. Alternatively, the storage unit may be a storage unit, such as a read-only memory (read-only memory, ROM), another type of static storage device that can store static information and instructions, or a random access memory (random access memory, RAM), in a wireless access device but outside the chip.

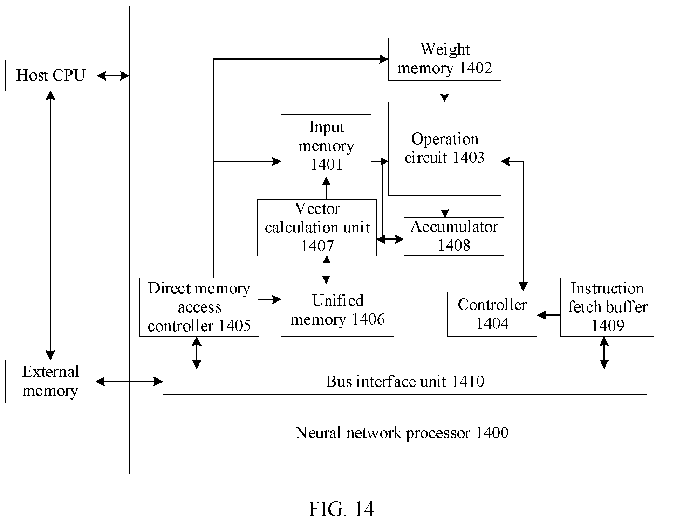

Specifically, FIG. 14 is a schematic diagram of a structure of a chip according to an embodiment of this application. The chip may be a neural network processing unit NPU 1400. The NPU 1400 is mounted to a host CPU (Host CPU) as a coprocessor, and the host CPU allocates a task. A core part of the NPU is an operation circuit 1403. The operation circuit 1403 is controlled by a controller 1404 to extract matrix data from a memory and perform a multiplication operation.

In some implementations, the operation circuit 1403 includes a plurality of processing engines (Processing Engines, PEs) inside. In some implementations, the operation circuit 1403 is a two-dimensional systolic array. The operation circuit 1403 may alternatively be a one-dimensional systolic array or another electronic circuit capable of performing mathematical operations such as multiplication and addition. In some implementations, the operation circuit 1403 is a general-purpose matrix processor.

For example, it is assumed that there are an input matrix A, a weight matrix B, and an output matrix C. The operation circuit 1403 fetches, from a weight memory 1402, data corresponding to the matrix B, and buffers the data on each PE in the operation circuit. The operation circuit fetches data of the matrix A from an input memory 1401, performs a matrix operation on the matrix B and the data of the matrix A, and stores, in an accumulator (accumulator) 1408, a partial result or a final result of an obtained matrix.

A unified memory 1406 is configured to store input data and output data. Weight data is directly transferred to the weight memory 1402 through a direct memory access controller (Direct Memory Access Controller, DMAC) 1405. The input data is also transferred to the unified memory 1406 through the DMAC 1405.

A BIU is a bus interface unit, namely, a bus interface unit 1410, and is used for interaction between an AXI bus and the DMAC and between the AXI bus and an instruction fetch buffer (Instruction Fetch Buffer, IFB) 1409.

The bus interface unit (Bus Interface Unit, BIU for short) 1410 is used by the instruction fetch buffer 1409 to obtain an instruction from an external memory, and is further used by the direct memory access controller 1405 to obtain original data of the input matrix A or the weight matrix B from the external memory.

The DMAC is mainly configured to transfer input data in the external memory to the unified memory 1406, or transfer weight data to the weight memory 1402, or transfer input data (data) to the input memory 1401.

A vector calculation unit 1407 includes a plurality of operation processing units; and if necessary, performs further processing such as vector multiplication, vector addition, an exponential operation, a logarithmic operation, or value comparison on an output of the operation circuit 1403. The vector calculation unit 1407 is mainly configured to perform network calculation, such as batch normalization (batch normalization), pixel-level summation, and upsampling on a feature plane, at a non-convolutional/fully connected layer in a neural network.

In some implementations, a processed vector output by the vector calculation unit 1407 can be stored in the unified memory 1406. For example, the vector calculation unit 1407 may apply a linear function or a nonlinear function to the output of the operation circuit 1403, for example, perform linear interpolation on a feature plane extracted at a convolutional layer. For another example, the vector calculation unit 1407 may apply a linear function or a nonlinear function to a vector of an accumulated value, to generate an activation value. In some implementations, the vector calculation unit 1407 generates a normalized value, a value obtained by performing pixel-level summation, or a combination thereof. In some implementations, the output processed vector can be used as an activation input to the operation circuit 1403. For example, the processed output vector can be used at a subsequent layer in the neural network.

The instruction fetch buffer (instruction fetch buffer) 1409 connected to the controller 1404 is configured to store an instruction used by the controller 1404.

The unified memory 1406, the input memory 1401, the weight memory 1402, and the instruction fetch buffer 1409 are all on-chip memories. The external memory is private for a hardware architecture of the NPU.

The processor mentioned above may be a general-purpose central processing unit, a microprocessor, an ASIC, or one or more integrated circuits for controlling program execution.

In addition, it should be noted that the described apparatus embodiments are merely examples. The units described as separate parts may or may not be physically separate, and parts displayed as units may or may not be physical units, may be located in one position, or may be distributed on a plurality of network units. Some or all of the modules may be selected based on actual requirements to achieve the objectives of the solutions of the embodiments. In addition, in the accompanying drawings of the apparatus embodiments provided in this application, connection relationships between modules indicate that there are communication connections between the modules, and may be specifically implemented as one or more communication buses or signal cables.

Based on the description of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any functions that are performed by a computer program can be easily implemented by using corresponding hardware. Moreover, there may be various specific hardware structures, such as analog circuits, digital circuits, or dedicated circuits, used to achieve a same function. However, as for this application, a software program implementation is a better implementation in most cases. Based on such an understanding, the technical solutions of this application essentially or the part contributing to the conventional technology may be implemented in a form of a software product. The software product is stored in a computer-readable storage medium, such as a floppy disk, a USB flash drive, a removable hard disk, a ROM, a RAM, a magnetic disk, or an optical disc of a computer, and includes several instructions for enabling a computer device (which may be a personal computer, a training device, a network device, or the like) to perform the methods in embodiments of this application.

All or some of the foregoing embodiments may be implemented by using software, hardware, firmware, or any combination thereof. When software is used to implement the embodiments, all or some of the embodiments may be implemented in a form of a computer program product.

The computer program product includes one or more computer instructions. When the computer program instructions are loaded and executed on the computer, the procedures or the functions according to the embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, training device, or data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or may be a data storage device, such as a training device or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid State Drive, SSD)), or the like.

**Claims**

1. A model compression method, wherein the method comprises:

    obtaining a first neural network model, a second neural network model, and a third neural network model, wherein the first neural network model comprises a transformer (transformer) layer, the second neural network model comprises the first neural network model or a neural network model obtained by performing parameter update on the first neural network model, and the third neural network model is obtained by compressing the second neural network model;
    processing first to-be-processed data by using the first neural network model, to obtain a first output;
    processing the first to-be-processed data by using the third neural network model, to obtain a second output;
    determining a first target loss based on the first output and the second output, and updating the second neural network model based on the first target loss, to obtain an updated second neural network model; and
    compressing the updated second neural network model to obtain a target neural network model.

2. The method according to claim 1, wherein a difference between processing results obtained by processing same data by using the second neural network model and the first neural network model falls within a preset range.

3. The method according to claim 1 or 2, wherein a difference between processing results obtained by processing same data by using the updated second neural network model and the first neural network model falls within the preset range.

4. The method according to any one of claims 1 to 3, wherein the third neural network model is obtained by quantizing the second neural network model, and the compressing the updated second neural network model to obtain a target neural network model comprises:
    quantizing the updated second neural network model to obtain the target neural network model.

5. The method according to any one of claims 1 to 4, wherein the second neural network model and the third neural network model each comprise an embedding layer, a transformer layer, and an output layer; the first output is an output of a target layer in the second neural network model; the second output is an output of a target layer in the third neural network model; and the target layer comprises at least one of the embedding layer, the transformer layer, and the output layer.

6. The method according to any one of claims 1 to 5, wherein the method further comprises:

processing second to-be-processed data by using the first neural network model, to obtain a third output; processing the second to-be-processed data by using the target neural network model, to obtain a fourth output; determining a second target loss based on the third output and the fourth output, and updating the updated second neural network model based on the second target loss, to obtain a fourth neural network model; and compressing the fourth neural network model to obtain an updated target neural network model.

7. The method according to any one of claims 1 to 6, wherein the first to-be-processed data comprises one of audio data, text data, and image data.

8. The method according to any one of claims 1 to 7, wherein the obtaining a first neural network model comprises: performing parameter fine-tuning or knowledge distillation on a pre-trained language model, to obtain the first neural network model, wherein processing precision of the first neural network model during target task processing is higher than a preset value.

9. A model compression apparatus, wherein the apparatus comprises:

an obtaining module, configured to obtain a first neural network model, a second neural network model, and a third neural network model, wherein the first neural network model comprises a transformer (transformer) layer, the second neural network model comprises the first neural network model or a neural network model obtained by performing parameter update on the first neural network model, and the third neural network model is obtained by compressing the second neural network model; a data processing module, configured to: process first to-be-processed data by using the first neural network model, to obtain a first output; and process the first to-be-processed data by using the third neural network model, to obtain a second output; a model update module, configured to: determine a first target loss based on the first output and the second output, and update the second neural network model based on the first target loss, to obtain an updated second neural network model; and a model compression module, configured to: compress the updated second neural network model to obtain a target neural network model.

10. The apparatus according to claim 9, wherein a difference between processing results obtained by processing same data by using the second neural network model and the first neural network model falls within a preset range.

11. The apparatus according to claim 9 or 10, wherein a difference between processing results obtained by processing same data by using the updated second neural network model and the first neural network model falls within the preset range.

12. The apparatus according to any one of claims 9 to 11, wherein the third neural network model is obtained by quantizing the second neural network model, and the model compression module is configured to quantize the updated second neural network model to obtain the target neural network model.

13. The apparatus according to any one of claims 9 to 12, wherein the second neural network model and the third neural network model each comprise an embedding layer, a transformer layer, and an output layer; the first output is an output of a target layer in the second neural network model; the second output is an output of a target layer in the third neural network model; and the target layer comprises at least one of the embedding layer, the transformer layer, and the output layer.

14. The apparatus according to any one of claims 9 to 13, wherein the data processing module is configured to: process second to-be-processed data by using the first neural network model, to obtain a third output; and process the second to-be-processed data by using the target neural network model, to obtain a fourth output;

the model update module is configured to: determine a second target loss based on the third output and the fourth output, and update the updated second neural network model based on the second target loss, to obtain a fourth neural network model; and

the model compression module is configured to compress the fourth neural network model to obtain an updated target neural network model.

15. The apparatus according to any one of claims 9 to 14, wherein the first to-be-processed data comprises one of audio data, text data, and image data.

16. The apparatus according to any one of claims 9 to 15, wherein the obtaining module is configured to perform parameter fine-tuning or knowledge distillation on a pre-trained language model, to obtain the first neural network model, wherein processing precision of the first neural network model during target task processing is higher than a preset value.

17. A model compression apparatus, wherein the apparatus comprises a memory and a processor, the memory stores code, and the processor is configured to obtain the code and perform the method according to any one of claims 1 to 8.

18. A computer storage medium, wherein the computer storage medium stores one or more instructions, and when the one or more instructions is/are executed by one or more computers, the one or more computers is/are enabled to perform the method according to any one of claims 1 to 8.

Intelligent information chain

Smart product and industry application

| Translation/Text analysis/... | Speech/Vision/Image/... |

| Data | | Data processing: | Data training/Machine learning/Deep learning | Searching/ Inference/ Decision-making | ... |

Infrastructure | Sensors | Smart chips | Basic platforms | ...

IT value chain

FIG. 1

Interaction interface

Speech/Query
statement/Text/...

Voice response/Response
statement/Text/...

...

Memory

Processor

Data training/Machine
learning/Deep learning

Searching/
Inference/
Decision-making

...

Data processing device (server)

User

User equipment

FIG. 2

FIG. 3

EP 4 206 994 A1

FIG. 4

FIG. 5

Obtain a first neural network model, a second neural network model, a third neural network model, and to-be-processed data, where the first neural network model includes a transformer layer

601

Process the to-be-processed data by using the first neural network model, to obtain a first output

602

Process the to-be-processed data by using the third neural network model, to obtain a second output

603

Obtain a target loss based on the first output and the second output, and update the second neural network model based on the target loss, to obtain an updated second neural network model

604

Compress the updated second neural network model to obtain a target neural network model

605

FIG. 6

Neural network model

Transformer layer

...

Transformer layer

Embedding layer

FIG. 7

FIG. 8

FIG. 9

Second neural
network model

Third neural
network model

First neural
network model

Task

Task

$loss_t$

Task

Quantization

Intermediate

Intermediate

$loss_i$

Intermediate

Embedding

Embedding

$loss_e$

Embedding

Gradient feedbackward and parameter update

FIG. 10

1100

1101

Obtaining module

1102

Data processing module

1104

Model compression module

1103

Model update module

FIG. 11

Execution device

FIG. 12

1300

Training device

1313 — Central processing unit

Power supply — 1326

Wired or wireless network interface — 1350

Operating system — 1341

Data — 1344

Application — 1342

Storage medium — 1330

Input/Output interface — 1358

Memory — 1332

FIG. 13

FIG. 14

## INTERNATIONAL SEARCH REPORT

| International application No. |
| --- |
| **PCT/CN2021/118082** |

| A. | CLASSIFICATION OF SUBJECT MATTER |
| --- | --- |

G06N 3/063(2006.01)i; G06K 9/62(2006.01)n

According to International Patent Classification (IPC) or to both national classification and IPC

| B. | FIELDS SEARCHED |
| --- | --- |

Minimum documentation searched (classification system followed by classification symbols)

G06N; G06K

Documentation searched other than minimum documentation to the extent that such documents are included in the fields searched

Electronic data base consulted during the international search (name of data base and, where practicable, search terms used)

CNPAT, WPI, EPODOC, CNKI, GOOGLE, ISI: 神经网络, 模型, 训练, 学习, 老师, 教师, 学生, 压缩, 量化, 剪枝; neural network, model, train, learn, teacher, student, compress, cut, quantization

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 112257858 A (HUAWEI TECHNOLOGIES CO., LTD.) 22 January 2021 (2021-01-22) claims 1-18 | 1-18 |
| A | CN 111523640 A (BEIJING BAIDU NETCOM SCIENCE AND TECHNOLOGY CO., LTD.) 11 August 2020 (2020-08-11) description, paragraphs [0036]-[0081] | 1-18 |
| A | CN 111382863 A (SHANGHAI O-FILM INTELLIGENT VEHICLE ASSOCIATION TECHNOLOGY CO., LTD.) 07 July 2020 (2020-07-07) entire document | 1-18 |
| A | CN 111368972 A (HUAWEI TECHNOLOGIES CO., LTD.) 03 July 2020 (2020-07-03) entire document | 1-18 |
| A | CN 111488985 A (SOUTH CHINA UNIVERSITY OF TECHNOLOGY) 04 August 2020 (2020-08-04) entire document | 1-18 |
| A | US 2018096246 A1 (OKI ELECTRIC INDUSTRY CO., LTD.) 05 April 2018 (2018-04-05) entire document | 1-18 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **13 October 2021** | **26 October 2021** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/118082**

| Patent document cited in search report | | | Publication date (day/month/year) | Patent family member(s) | | | Publication date (day/month/year) |
|---|---|---|---|---|---|---|---|
| CN | 112257858 | A | 22 January 2021 | None | | | |
| CN | 111523640 | A | 11 August 2020 | None | | | |
| CN | 111382863 | A | 07 July 2020 | None | | | |
| CN | 111368972 | A | 03 July 2020 | WO | 2021164750 | A1 | 26 August 2021 |
| CN | 111488985 | A | 04 August 2020 | None | | | |
| US | 2018096246 | A1 | 05 April 2018 | JP | 2018055514 | A | 05 April 2018 |
| | | | | JP | 6690489 | B2 | 28 April 2020 |

Form PCT/ISA/210 (patent family annex) (January 2015)

**REFERENCES CITED IN THE DESCRIPTION**

**Patent documents cited in the description**

- CN 202010997722